# EUROPÄISCHE PATENTANMELDUNG

(11) **EP 4 556 879 A1**
(43) Veröffentlichungstag der Anmeldung: **21.05.2025**
(21) Anmeldenummer: 24202648.2
(22) Anmeldetag: 25.09.2024
(51) Int. Cl.: G01M 17/007

(54) **VORRICHTUNG ZUR KRAFTEINLEITUNG IN EIN TESTOBJEKT**

(30) Priorität: 14.11.2023 DE 102023131735
(71) Anmelder: Illinois Tool Works Inc., Glenview IL 60025 (US)
(72) Erfinder: BRENDEL, Wolfgang, Glenview, Illinois, 60025 (US); CLÜSSERATH, Alfred, Glenview, Illinois, 60025 (US); BERTEMES, Burkhard, Glenview, Illinois, 60025 (US); JUNG, Gerald, Glenview, Illinois, 60025 (US)
(74) Vertreter: Meissner Bolte Partnerschaft mbB

(57) **Zusammenfassung**

Die vorliegende Erfindung betrifft eine Vorrichtung (100) zur Krafteinleitung in ein Test-Fahrzeug, wobei die Vorrichtung (100) Folgendes aufweist: ein Radadapterelement (102), welches dazu ausgebildet ist mit einem Test-Fahrzeug verbunden zu werden; wenigstens eine erste Belastungsanordnung (108) zum Bewegen des Radadapterelements (102) in einer ersten, insbesondere translatorischen, Richtung; eine Haltevorrichtung (150), welche mit der ersten Belastungsanordnung verbunden und dazu ausgebildet ist die erste Belastungsanordnung in einer beliebigen Position, insbesondere einer Arbeitsposition, zu fixieren, wobei die Haltevorrichtung (150) unabhängig von der ersten Belastungsanordnung (108) steuerbar ist.

## Beschreibung

Die vorliegende Erfindung betrifft eine Vorrichtung zur Krafteinleitung in ein Test-Fahrzeug, insbesondere zum Simulieren von im Fahrbetrieb in ein Kraftfahrzeug oder in Teile eines Kraftfahrzeugs eingeleiteten Kräften bzw. Momenten.

Fahrdynamik, Fahrkomfort und Fahrsicherheit sind Kernelemente bei der Fahrzeugentwicklung. Das Fahrwerk spielt dabei eine entscheidende Rolle. Es hat die Aufgabe, die Fahrzeugmasse abzustützen, zu federn, Schwingungen und Geräusche zu dämpfen, externe Störgrößen zu kompensieren, das Antriebsmoment auf die Fahrbahn zu bringen und die Räder zu lagern, zu führen, zu lenken und zu bremsen. Neben dieser Vielfalt an Aufgaben, ist das Fahrwerk zudem komplexen Belastungen ausgesetzt, denen auch die Vielzahl von eingesetzten aktiven und adaptiven Fahrwerkkomponenten standhalten müssen. Steigende Ansprüche erfordern eine stetige Weiterentwicklung und Optimierung von Fahrwerkskomponenten, Karosserie und Anbauteilen, um den Einfluss von Fahrbahnverhältnissen zu minimieren, Gewicht und Kosten zu reduzieren und zeitgleich die Lebensdauer und Sicherheit zu erhöhen.

Einerseits können derartige Einflüsse auf die Fahrwerkskomponenten durch Langzeit-Tests (z.B. Testfahrten) überprüft werden. Um einen Lebenszyklus eines Fahrzeugs zu simulieren ist es jedoch notwendig, mehrere hunderttausend Kilometer Fahrbetrieb zu testen. Hierfür wären selbst bei durchgehenden Testfahrten mehrere Monate notwendig. Aus den oben genannten Gründen kommen "Prüfstände" zum Einsatz, welche die im realen Fahrbetrieb auftretenden Kräfte und Belastungen möglichst wirklichkeitsgetreu nachbilden können. Derartige Prüfstände können die über mehrere hunderttausend Kilometer auftretenden Kräfte und Belastungen innerhalb weniger Tage/Wochen simulieren.

"Prüfstände" dienen in der Regel dazu, am Ende eines betriebsfestigkeitsbezogenen Absicherungsprozesses, die im realen Fahrbetrieb auftretenden und auf ein zu prüfendes Fahrzeug bzw. auf Teile eines zu prüfenden Fahrzeugs wirkenden Kräfte und Belastungen möglichst wirklichkeitsgetreu nachzubilden. Hierzu werden reale Betriebslasten nach Fahrversuche auf Achs- bzw. Gesamtfahrzeugprüfständen durchgeführt, um Rückschlüsse der Auswirkungen bestimmter Belastungen, vor allem auf die Betriebsfestigkeit und das Schwingverhalten des Fahrzeugs, ziehen zu können.

Durch derartige Prüfstände können bereits in einem Frühentwicklungsstadium, ohne auf fahrfähige Gesamtfahrzeuge angewiesen zu sein, Untersuchungen von Fahrwerksystemen unter verschiedenen Fahrzuständen und Fahrbahnverhältnissen durchgeführt werden.

Prüfstände simulieren die im Fahrbetrieb auf das Fahrwerk, die Karosserie und Anbauteile einwirkenden Belastungen. Vertikalbewegungen, hervorgerufen durch Fahrbahnunebenheiten, Kräfte, Momente und Bewegungen erzeugt durch Fahrzeugmanöver werden möglichst realitätsnah nachgebildet. Auch Umwelteinflüsse, wie Temperatur und korrosive Effekte, können parallel simuliert werden. Aktive und adaptive Fahrwerkskomponenten können dabei über entsprechende Schnittstellen der Prüfstandelektronik synchron in den Prüfablauf integriert werden.

Die aus dem Stand-der-Technik bekannten Prüfstände unterscheiden sich insbesondere durch die Art, mit welcher Kräfte in das Fahrwerk, die Karosserie und Anbauteileneingeleitet werden. So basiert eine erste Kategorie von Prüfständen auf Plattformen, auf denen je ein Reifen des Test-Fahrzeugs gelagert ist. Die Plattformen können in mehreren Freiheitsgraden bewegt werden, um Belastungen im Straßenverkehr zu simulieren. Andere Prüfstände verwenden Fließbänder bzw. Rollenbahnen, um die Fahrtbewegung zu simulieren. Schließlich existieren Prüfstände mit Radadapterelementen, welche durch eine Vielzahl an Linearantrieben im Raum beweglich sind. Die Radadapterelemente dienen als Simulation der in der Realität verwendeten Fahrzeugräder und werden während dem Test mit dem Fahrwerk des Test-Fahrzeugs verbunden, so dass die in das Radadapterelement eingeleiteten Kräfte direkt auf das Fahrwerk des Test-Fahrzeugs übertragen werden können.

Bei bekannten Prüfständen mit Radadapterelementen ist möglich, dass eine Arbeitsposition bzw. jede andere Position der Prüfstände unbeabsichtigt verlassen wird. Dies kann einerseits zu Schäden am Test-Fahrzeug bzw. dem Prüfstand selbst führen. Andererseits kommt es zu einem erhöhten Verletzungsrisiko, falls das Test-Fahrzeug und der Prüfstand unkontrollierte Bewegungen ausführen.

Auf Grundlage der oben genannten Problemstellung, liegt der vorliegenden Erfindung die Aufgabe zu Grunde, eine Vorrichtung zur Krafteinleitung in ein Test-Fahrzeug anzugeben, mit der sichergestellt werden kann, dass eine unbeabsichtigte Bewegung der Vorrichtung und insbesondere des Radadapterelements aus der Arbeitsposition (oder jeder anderen Position) wirkungsvoll verhindert wird.

Die vorliegende Aufgabe wird durch den Gegenstand des unabhängigen Patentanspruchs 1 gelöst. Vorteilhafte Weiterbildungen der erfindungsgemäßen Vorrichtung sind in den abhängigen Patentansprüchen 2 bis 10 angegeben.

Dementsprechend betrifft die vorliegende Erfindung eine Vorrichtung zur Krafteinleitung in ein Test-Fahrzeug, wobei die Vorrichtung Folgendes aufweist:
- ein Radadapterelement, welches dazu ausgebildet ist mit einem Test-Fahrzeug verbunden zu werden;
- wenigstens eine erste Belastungsanordnung zum Bewegen des Radadapterelements in einer ersten, insbesondere translatorischen, Richtung;
- eine Haltevorrichtung, welche mit der ersten Belastungsanordnung verbunden und dazu ausgebildet ist die erste Belastungsanordnung in einer beliebigen Position, insbesondere einer Arbeitsposition, zu fixieren,
wobei die Haltevorrichtung unabhängig von der Belastungsanordnung steuerbar ist.

Die Vorteile der erfindungsgemäßen Vorrichtung liegen auf der Hand. So kann durch die neuartige Haltevorrichtung gewährleistet werden, dass die Belastungsanordnung und das damit verbundene Radadapterelement nur dann beweglich sind, wenn die Haltevorrichtung gelöst wird. Da die Haltevorrichtung separat zur Belastungsanordnung ausgebildet ist, das heißt separat ansteuerbar ist, hat ein Druckverlust in der Belastungsanordnung keine weiteren Folgen auf die Fixierung der Haltevorrichtung. Das heißt, die Belastungsanordnung sowie das Radadapterelement verweilen auch weiterhin in der gewählten Parkposition, beispielsweise der Arbeitsposition. Durch die neuartige Vorrichtung kann eine Redundanz beim Halten der gewünschten Positionen erzielt werden. Einerseits kann die Belastungsanordnung und das damit verbundene Radadapterelement durch die Aktuatoren der Belastungsanordnung in der gewünschten Position gehalten werden. Sollte es zum Druckverlust bei den Aktuatoren der Belastungsanordnung kommen, so kann als zusätzliche Sicherheit die Haltevorrichtung dienen, welche selbständig dazu in der Lage ist, die Belastungsanordnung festzulegen.

Nach einer weiteren Ausführungsform ist die Haltevorrichtung dazu ausgebildet eine Bewegung der ersten Belastungsanordnung graduell zu bremsen, bis die Belastungsanordnung in einer gewünschten Position ruht und durch die Haltevorrichtung fixiert wird. Eine derartige, graduelle Bremsung der Bewegung der ersten Belastungsanordnung reduziert die Belastung auf das Fahrwerk des Test-Fahrzeugs. Mit anderen Worten, die Haltevorrichtung dieser Ausführungsform ist nicht als fester Anschlag ausgebildet, welcher die Bewegung der Belastungsanordnung mit sofortiger Wirkung stoppt. Vielmehr wird durch die Haltevorrichtung die Bewegung der ersten Belastungsanordnung über einen bestimmbaren Bewegungsbereich der Belastungsanordnung schrittweise verringert, bis die Belastungsanordnung in der gewählten Position zum Stillstand kommt.

Nach einer weiteren Ausführungsform weist die Haltevorrichtung eine Scheibenbremse auf, um die Bewegung der Belastungsanordnung graduell zu bremsen. Bei einer Scheibenbremse handelt es sich um ein besonders stabiles und guterprobtes Mittel, um einerseits mechanische Bewegungen zu verlangsamen und als Feststellbremse bzw. Fixierungsvorrichtung zu fungieren.

Die Scheibenbremse kann ein Bremsscheibensegment aufweisen, welches an der ersten Belastungsanordnung angebracht ist. Mit anderen Worten, die Bewegung der ersten Belastungsanordnung führt zu einer korrespondierenden Bewegung des Bremsscheibensegments gegenüber einem entsprechenden Fixierelement, wie beispielsweise Bremsbacken, der Scheibenbremse. In alternativen Ausführungsformen kann die Scheibenbremse auch eine komplette Bremsscheibe aufweisen. Das Bremsscheibensegment erstreckt sich vorzugsweise über einen Winkel, der dem Antriebswinkel bzw. Schwenkbereich der ersten Belastungsanordnung entspricht.

Nach einer weiteren Ausführungsform weist die erste Belastungsanordnung ein Hebelelement, insbesondere einen einarmigen Hebel, auf, welches zwischen einem ersten Aktuator und dem Radadapterelement angeordnet ist, um das Radadapterelement in der ersten Richtung zu bewegen, wobei die Bremsscheibe an einer Schwenkachse des Hebelelements befestigt ist. Mit anderen Worten, das Hebelelement dieser Ausführungsform dient nicht nur als mechanischer Kraftwandler, sondern eignet sich gleichzeitig zum Bewegen der Bremsscheibe bzw. des Bremsscheibensegments gegenüber den Bremsbacken.

Nach einer weiteren Ausführungsform weist die erste Belastungsanordnung ein Übertragungselement, insbesondere eine Koppelstange, auf, welches zwischen dem Hebelelement und dem Radadapterelement angeordnet ist. Das Übertragungselement ist derart mit dem Radadapterelement verbunden, dass dieses in sechs Freiheitsgraden gegenüber dem Hebelelement der Belastungsanordnung bewegbar ist, um sämtliche Fahrbahnbelastungen simulieren zu können.

Nach einer weiteren Ausführungsform weist die Vorrichtung ferner Folgendes auf:
- eine zweite Belastungsanordnung zum Bewegen des Radadapterelements in einer zweiten, insbesondere translatorischen, Richtung, wobei die zweite Richtung im Wesentlichen orthogonal zur ersten Richtung verläuft;
- eine dritte Belastungsanordnung zum Bewegen des Radadapterelements in einer dritten, insbesondere translatorischen, Richtung, wobei die dritte Richtung im Wesentlichen orthogonal zur ersten und zweiten Richtung verläuft,
wobei das Übertragungselement der ersten Belastungsanordnung in einem Dreigelenkknoten mit Übertragungselementen der zweiten und dritten Belastungsanordnung gelenkig verbunden ist.

Gemäß dieser Ausführungsform lässt sich das Radadapterelement in allen drei translatorischen Bewegungsrichtungen bewegen. Durch die Verbindung der ersten Belastungsanordnung mit den zweiten und dritten Belastungsanordnungen über den Dreigelenkknoten ist es möglich, mit nur einer Haltevorrichtung die ungewollten Bewegungen des Radadapterelements in allen Bewegungsrichtungen zu unterbinden.

Nach einer weiteren Ausführungsform weist die Haltevorrichtung wenigstens ein Fixierelement zur Aktivierung der Haltevorrichtung auf, wobei das Fixierelement über mindestens ein elastisches Pufferelement mit einer Halterung der Haltevorrichtung verbunden ist. Das Fixierelement kann beispielsweise als Bremsbacke einer Bremsscheibenanordnung ausgebildet sein, wie dies oben bereits erwähnt wurde. Alternativ kann das Fixierelement jedoch auch als Stift ausgebildet sein, welcher in eine entsprechende Lochscheibe der Belastungsanordnung eingebracht werden kann, um die Belastungsanordnung formschlüssig in der gewünschten Position zu halten. Unabhängig davon, wie das Fixierelement ausgebildet ist, wird durch die elastischen Pufferelemente eine gewisse Nachgiebigkeit der Haltevorrichtung gewährleistet. Mit anderen Worten, selbst in der Parkposition/Arbeitsposition der Belastungsanordnung ist eine temporäre Bewegung, das heißt ein elastisches Einfedern, möglich. Diese Ausführungsform verhindert, wie auch das graduelle Bremsen durch die Bremsscheiben, ein abruptes Stoppen der Belastungsanordnung. Vielmehr kann die Belastungsanordnung durch die elastischen Pufferelemente kurzzeitig über die gewählte Park-/Arbeitsposition hinausverfahren werden, bis die Bewegung komplett durch das elastische Pufferelement aufgefangen und in die Parkposition zurückgestellt wird.

Nach einer weiteren Ausführungsform ist das Fixierelement als Reibungsbremse ausgebildet, wobei die Haltevorrichtung eine Bremsscheibe aufweist, welche dazu ausgelegt ist mit der Reibungsbremse zusammenzuwirken, um die erste Belastungsanordnung zu fixieren, wobei das mindestens eine Pufferelement derart angeordnet ist, dass die Reibungsbremse zumindest in einer zur Bremsscheibe parallelen Ebene beweglich gegenüber der Halterung ist.

Nach einer weiteren Ausführungsform weist das Fixierelement Bremsbacken auf, welche dazu ausgelegt sind mit der Bremsscheibe zusammenzuwirken, um die erste Belastungsanordnung zu fixieren. Wie oben bereits erwähnt, ist es jedoch alternativ auch möglich, andere Fixierelemente vorzusehen, welche nicht auf dem Scheibenbremsenprinzip beruhen.

Ein weiterer Aspekt der vorliegenden Erfindung betrifft einen Prüfstand zum Simulieren von im Fahrbetrieb auftretenden Kräften und Belastungen in einem Test-Fahrzeug, wobei der Prüfstand je eine der vorhergehenden Vorrichtungen pro Rad des Test-Fahrzeugs aufweist.

Nachfolgend wird die erfindungsgemäße Vorrichtung anhand der in den Figuren dargestellten Ausführungsformen näher erläutert. Dabei zeigen:
- FIG. 1: eine schematische, perspektivische Ansicht einer Vorrichtung zur Krafteinleitung in ein Test-Fahrzeug gemäß einer Ausführungsform der vorliegenden Erfindung;
- FIG. 2: eine Schnittdarstellung durch die in FIG. 1 gezeigte perspektivische Ansicht der ersten Ausführungsform;
- FIG. 3: eine seitliche Schnittdarstellung der Ausführungsform gemäß FIG. 1; und
- FIG. 4: eine schematische, perspektivische Darstellung eines Teils der Haltevorrichtung gemäß einer Ausführungsform der vorliegenden Erfindung.

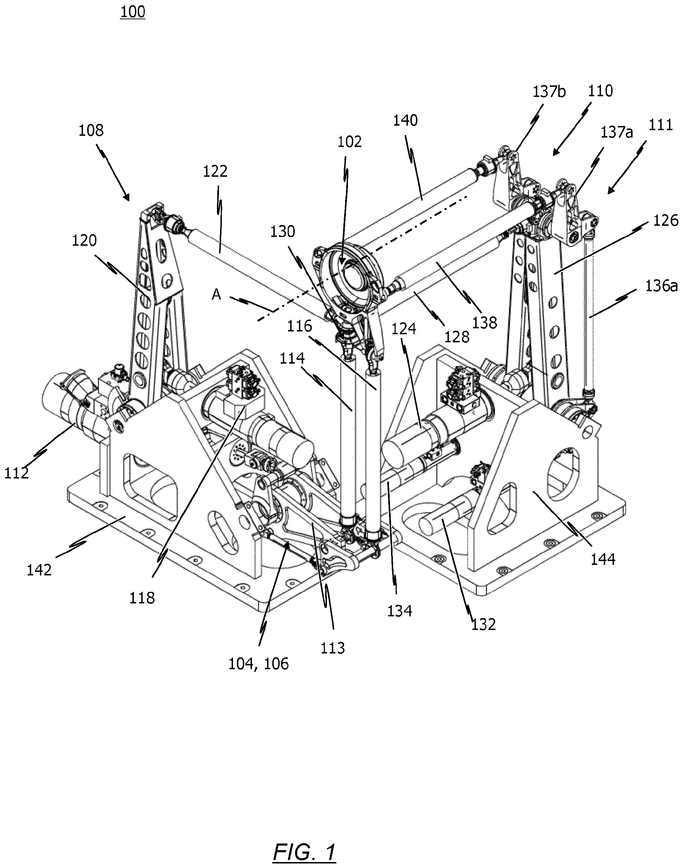

Der FIG. 1 ist eine perspektivische Ansicht einer Vorrichtung zur Krafteinleitung in ein Test-Fahrzeug gemäß einer Ausführungsform der vorliegenden Erfindung zu entnehmen. Die Vorrichtung 100 dient dazu ein Radadapterelement 102 in mehreren Freiheitsgraden zu bewegen. Insbesondere kann durch die Vorrichtung 100 das Radadapterelement 102 in sechs Freiheitsgraden bewegt werden.

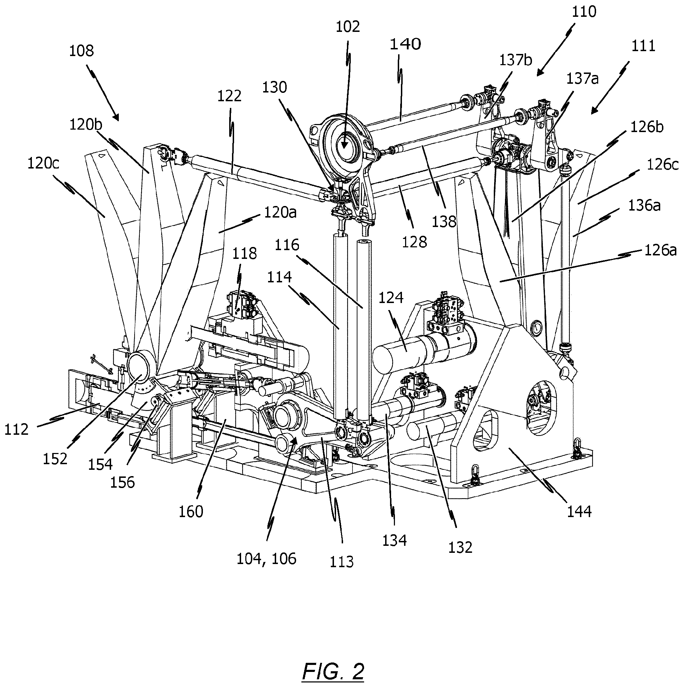

Die Vorrichtung 100 kann Teil eines Prüfstands zum Simulieren von Fahrwerkbelastungen während der Fahrt sein. Beispielsweise kann ein derartiger Prüfstand vier Vorrichtungen gemäß FIG. 1 enthalten, je eine Vorrichtung pro Rad des Test-Fahrzeugs. Im Folgenden soll anhand der FIGs. 1 und 2 lediglich eine einzelne Vorrichtung zur Krafteinleitung beschrieben werden. Die Funktion der verbleibenden Vorrichtungen zur Krafteinleitung ergibt sich analog. Selbstverständlich wird die Ansteuerung der Aktuatoren in den Vorrichtungen 100 eines Prüfstands miteinander synchronisiert, um die gewünschte Belastung auf das Fahrwerk des Test-Fahrzeugs zu erzeugen.

Obwohl dies in FIG. 1 nicht gezeigt ist, wird bei der Verwendung der Vorrichtung 100 das Test-Fahrzeug mit dem Radadapterelement 102 verbunden. Insbesondere wird das Fahrwerk, wie beispielsweise die Vorder- oder Hinterachse sowie die Stoßdämpfer, vor Testbeginn mit dem Radadapterelement 102 verbunden.

Die Vorrichtung 100 weist eine erste Belastungsanordnung 108 zum Bewegen des Radadapterelements 102 in einer ersten, translatorischen Richtung auf. In der hier dargestellten Ausführungsform handelt es sich bei der ersten Richtung um eine Längsrichtung, welche im Betrieb parallel zur Längsachse des Test-Fahrzeugs ist.

Die Vorrichtung 100 weist ferner eine zweite Belastungsanordnung 104 zum Bewegen des Radadapterelements 102 in einer zweiten, translatorischen Richtung auf. In der hier dargestellten Ausführungsform handelt es sich bei der zweiten Richtung um die vertikale Richtung. Die zweite, translatorische Richtung ist dementsprechend im Wesentlichen senkrecht zur ersten Richtung.

Eine dritte Belastungsanordnung 110 der Vorrichtung 100 zur Krafteinleitung in ein Test-Fahrzeug dient zum Bewegen des Radadapterelements 102 in einer dritten, translatorischen Richtung. Bei der dritten Richtung handelt es sich im hier dargestellten Ausführungsbeispiel um eine laterale Bewegungsrichtung. Die dritte Richtung verläuft im Wesentlichen senkrecht zur ersten und zweiten Richtung. Zusammenfassend wird durch die erste, zweite und dritte Belastungsanordnung 108, 104, 110 gewährleistet, dass das Radadapterelement 102 in allen drei translatorischen Bewegungsrichtungen bewegbar ist.

Die Vorrichtung 100 weist eine vierte Belastungsanordnung zum Rotieren des Radadapterelements 102 auf. Insbesondere kann die vierte Belastungsanordnung 106 dazu verwendet werden, das Radadapterelement um die Radachse A zu drehen und damit eine Bremskraft zu simulieren. Die Radachse A verläuft insbesondere parallel zur dritten Richtung. In der hier dargestellten Ausführungsform erstreckt sich die Radachse A in lateraler Richtung.

Die Vorrichtung 100 weist ferner eine fünfte Belastungsanordnung 111 auf, welche zur Einleitung von Lenkmomenten in das Radadapterelement 102 dient. Bei dem Lenkmoment handelt es sich um eine Rotation des Radadapterelements 102 um eine Vertikalachse (nicht dargestellt), die durch den Mittelpunkt des Radadapterelements 102 verläuft und die Radachse A senkrecht schneidet.

Durch die Kombination der dritten und fünften Belastungsanordnung 110, 111 kann ebenfalls ein Sturzmoment in das Radadapterelement 102 eingeleitet werden. Bei einem Sturzmoment handelt es sich um eine Rotation des Radadapterelements 102 um eine zu der Radachse A und der Vertikalachse (nicht dargestellt) senkrechte Querachse, welche parallel zur Längsachse des Test-Fahrzeugs verläuft.

In der hier dargestellten Ausführungsform sind die ersten, zweiten und vierten Belastungsanordnungen 108, 104, 106 an einer ersten Verankerung 142 befestigt.

Die dritten und fünften Belastungsanordnungen 110, 111 sind an einer zweiten Verankerung 144 befestigt. Die Verankerungen 142, 144 können beispielsweise an einer Bodenplatte befestigt werden, um die während dem Test auftretenden Gegenkräfte abzuleiten.

Jede der Belastungsanordnungen 104, 106, 108, 110, 111 weist mindestens einen Aktuator 112, 118, 124, 132, 134 auf, welcher über eine entsprechende Kinematik mit dem Radadapterelement 102 verbunden ist. Die Aktuatoren 112, 118, 124, 132, 134 sind allesamt als Linearantriebe dargestellt. Diese können beispielsweise als hydraulischer, elektrischer oder pneumatischer Linearantrieb ausgebildet sein. Andere Arten von Aktuatoren sind jedoch denkbar.

Die Kinematik jeder Belastungsanordnung 104, 106, 108, 110, 111 weist jeweils mindestens ein Hebelelement auf, welches den Aktuator mit einem Übertragungselement (hier mit einer Koppelstange) 114, 116, 122, 128, 138, 140 verbindet. Die Übertragungselemente selbst sind an einem ersten Ende je mit einem Hebel der Belastungsanordnung und an einem gegenüberliegenden, zweiten Ende mit dem Radadapterelement verbunden. Die als Koppelstangen ausgebildeten Übertragungselemente dienen insbesondere dazu, die Bewegung des Aktuators auf das Radadapterelement 102 zu übertragen.

Die erste Belastungsanordnung 108 weist einen ersten Aktuator 118 auf, welcher über ein Hebelelement 120 mit einem als Koppelstange ausgebildeten Übertragungselement 122 verbunden ist. Das Hebelelement 120 ist gemäß der hier dargestellten Ausführungsform als einarmiger Hebel dargestellt, welcher durch die Antriebsstange des ersten Aktuators 118 um eine Schwenkachse 152 (FIG. 2) verschwenkt werden kann. Das Übertragungselement 122 der ersten Belastungsanordnung 108 ist an einem ersten Ende mit einem Kugelgelenk eines Dreigelenkknotens 130 verbunden. An einem gegenüberliegenden, zweiten Ende ist das Übertragungselement 122 mit dem Hebelelement 120 gelenkig verbunden.

Bei der Stellung/Position nach FIGs. 1 bis 3 sind die Übertragungselemente 114, 116, 122, 128, 138, 140 der Belastungsanordnungen 104, 106, 108, 110, 111 orthogonal zueinander angeordnet. Diese Position wird als Arbeitsposition bezeichnet. In der Arbeitsposition sind wenigstens die Übertragungselemente 114, 122, 128 der ersten, zweiten und dritten Belastungsanordnungen 104, 108, 110 orthogonal ausgerichtet. Die Aktuatoren 112, 118, 124 sind jeweils zwischen ihren Endpositionen (zwischen einer komplett ausgefahrenen und einer komplett eingefahrenen Stellung) gelagert.

In einer Ruheposition (nicht dargestellt) ist dagegen zumindest der Aktuator 112 der zweiten Belastungsanordnung 104, d.h. der Belastungsanordnung zur Einleitung einer Vertikalbewegung, komplett eingefahren. In der Ruheposition befindet sich das Radadapterelement 102 dementsprechend in seiner unteren Endlage. In der Ruheposition sind die Hebelelemente 120 und 126 sowie die dazugehörigen Übertragungselemente 122, 128 der ersten und dritten Belastungsanordnungen 108, 110 nach unten geneigt, wie dies durch die Positionen 120a und 126a schematisch dargestellt ist.

Zurückkommend auf die in der FIG. 1 dargestellte Arbeitsposition der Vorrichtung 100 ist das Übertragungselement 120 senkrecht zu allen verbleibenden Übertragungselementen 114, 116, 128, 138, 140 ausgerichtet. Wie oben bereits angedeutet, dient die erste Belastungsanordnung 108 zum Eintrag von Bewegungen in Längsrichtung über das parallel zur Längsrichtung des Test-Fahrzeugs ausgerichtete Übertragungselement 122.

Auch die zweite Belastungsanordnung 104 weist einen Aktuator 112 auf. Der zweite Aktuator 112 ist über seine Antriebsstange mit einem Hebelelement 113 der zweiten Belastungsanordnung 104 verbunden. Das Hebelelement 113 ist in diesem Beispiel als Winkelhebel ausgebildet. Die Antriebsstange des zweiten Aktuators 112 ist an ihrem distalen Ende mit einem Gelenk eines ersten Hebelarms des Hebelelements 113 verbunden. Ein zweiter Hebelarm des Hebelelements 113 ist über ein Gelenk mit einem zweiten Ende des Übertragungselements 114 der zweiten Belastungsanordnung 104 verbunden.

Das Übertragungselement 114 der zweiten Belastungsanordnung 104 ist zwischen dem Dreigelenkknoten 130 und dem Hebelelement 113 angeordnet. Auch das Übertragungselement 114 der zweiten Belastungsanordnung ist in der hier dargestellten Ausführungsform als Koppelstange ausgebildet. Durch das Übertragungselement 114 der zweiten Belastungsanordnung 104 kann eine Bewegung des ersten Aktuators auf den Dreigelenkknoten 130 und das damit verbundene Radadapterelement 102 übertragen werden. Die in der FIG. 1 dargestellte zweite Belastungsanordnung 104 dient insbesondere zur vertikalen Bewegung des Radadapterelements 102.

Die dritte Belastungsanordnung 110 weist einen dritten Aktuator 124 auf, welcher über ein Hebelelement 126 mit einem Übertragungselement 128 gelenkig verbunden ist. Das Übertragungselement 128 ist in der in den FIGs. 1 und 2 dargestellten Arbeitsposition der Vorrichtung 100 orthogonal zu den Übertragungselementen 114, 116, 122 der ersten, zweiten und vierten Belastungsanordnung angeordnet. Auch das Übertragungselement 128 der dritten Belastungsanordnung 110 ist an einem ersten Ende mit dem Kugelgelenk des Dreigelenkknotens 130 verbunden. An einem zweiten, gegenüberliegenden Ende ist das Übertragungselement 128 mit dem Hebelelement 126 verbunden. Auch das Hebelelement 126 ist in der hier dargestellten Ausführungsform als einarmiger Hebel ausgebildet.

Den FIGs. 1 und 2 ist schließlich auch eine fünfte Belastungsanordnung 111 zu entnehmen. Die fünfte Belastungsanordnung 111 weist einen fünften Aktuator 132 und einen sechsten Aktuator 134 auf. Der fünfte Aktuator 132 ist über ein Übertragungselement 136a mit einem Hebelelement 137a verbunden. Das Hebelelement 137a ist beispielsweise als Winkelhebel ausgebildet. Ein zweites Ende des Hebelelements 137a ist mit einem zweiten Übertragungselement 138 verbunden. Das zweite Übertragungselement 138 der fünften Belastungsanordnung 111 verbindet das Hebelelement 137a mit einem Außenumfang des Radadapterelements 102.

Der sechste Aktuator 134 ist über ein drittes Übertragungselement mit einem Hebelelement 137b verbunden. Das Hebelelement 137b ist beispielsweise als Winkelhebel ausgebildet. Ein zweites Ende des Hebelelements 137b ist mit einem vierten Übertragungselement 140 der fünften Belastungsanordnung verbunden. Das vierte Übertragungselement 140 der fünften Belastungsanordnung 111 verbindet das Hebelelement 137b mit einem Außenumfang des Radadapterelements 102.

Das zweite und vierte Übertragungselement 138, 140 der fünften Belastungsanordnung 111 verlaufen parallel zueinander und parallel zur Radachse A des Radadapterelements 102. Die beiden Übertragungselemente 138, 140 sind stangenförmig ausgebildet. Die beiden Übertragungselemente 138, 140 sind jeweils mit dem Außenumfang des Radadapterelements 102 verbunden, insbesondere an diametral gegenüberliegenden Seitenflächen des Radadapterelements 102. Dementsprechend kann durch eine gegenläufige Ansteuerung der fünften und sechsten Aktuatoren 132, 134 der fünften Belastungsanordnung 111 ein Lenkmoment, das heißt eine Rotation um eine Vertikalachse des Radadapterelements 102, in das Radadapterelement 102 eingeleitet werden.

Den FIGs. 1 und 2 ist ferner zu entnehmen, dass der Dreigelenkknoten 130, in welchem die Übertragungselemente 114, 122, 128 der ersten, zweiten und dritten Belastungsanordnung 104, 108, 110 miteinander verbunden sind, unterhalb des Radelements 102 angeordnet ist. Der Dreigelenkknoten 130 kann dementsprechend als Radaufstandspunkt des Radadapterelements 102 verstanden werden. Durch die Anordnung des Dreigelenkknotens 130 unterhalb des Radadapterelements 102 können besonders realistische Fahrtkräfte simuliert werden.

Im Betrieb ist es möglich, die oben genannten translatorischen und rotatorischen Bewegungen gleichzeitig und dennoch unabhängig voneinander in das Radadapterelement 102 einzuleiten.

In der FIG. 2 ist eine perspektivische Schnittdarstellung der in FIG. 1 gezeigten Ausführungsform der Vorrichtung 100 gezeigt. Insbesondere ist der FIG. 2 eine Schnittdarstellung durch die erste und zweite Belastungsanordnung 108, 104 zu entnehmen. Wie oben bereits erwähnt, dient die erste Belastungsanordnung 108 insbesondere dazu, das Radadapterelement 102 in Längsrichtung des Test-Fahrzeugs zu bewegen. Hierzu wird eine Bewegung des ersten Aktuators 118 auf das Hebelelement 120 übertragen. Die Bewegung des Hebelelements 120 wird schließlich über das als Koppelstange ausgebildete Übertragungselement 122 auf das Radadapterelement 102 übertragen. Das Hebelelement 120 ist dazu insbesondere um die Schwenkachse 152 verschwenkbar.

In der Darstellung gemäß FIG. 2 sind drei Positionen 120a, 120b, 120c des Hebelelements 120 schematisch dargestellt. In einer ersten Position 120a ist das Hebelelement 120 im Uhrzeigersinn verschwenkt. Wie oben bereits angedeutet, kann es sich bei der Position 120a um die Stellung des Hebelelements 120 in der Ruheposition, d.h. der unteren Endlage, der Vorrichtung 100, handeln. In einer zweiten Position 120b befindet sich das Hebelelement 120 in der Arbeitsposition, d.h. die Übertragungselemente 114, 122, 128 sind orthogonal zueinander ausgerichtet. In einer dritten Position 120c ist das Hebelelement 120 entgegen dem Uhrzeigersinn verschwenkt. Es kann sich herbei beispielsweise um eine obere Endlage der Vorrichtung 100 handeln, bei der der Aktuator 112 der zweiten Belastungsanordnung 104 voll ausgefahren ist.

In FIG. 2 sind drei Positionen 126a, 126b, 126c des Hebelelements 126 der dritten Belastungsanordnung 110 schematisch dargestellt. In einer ersten Position 126a ist das Hebelelement 126 im entgegen dem Uhrzeigersinn, d.h. zum Radadapterelement 102 hin, verschwenkt. Bei der Position 126a kann es sich um die Stellung des Hebelelements 126 in der Ruheposition, d.h. der unteren Endlage, der Vorrichtung 100, handeln. In einer zweiten Position 126b befindet sich das Hebelelement 126 in der Arbeitsposition, d.h. die Übertragungselemente 114, 122, 128 sind orthogonal zueinander ausgerichtet. In einer dritten Position 126c ist das Hebelelement 126 im Uhrzeigersinn, d.h. vom Radadapterelement weg, verschwenkt. Es kann sich hierbei um eine obere Endlage der Vorrichtung 100 handeln, bei der der Aktuator 124 der zweiten Belastungsanordnung 104 voll ausgefahren ist.

Die oben gezeigten Positionen der Vorrichtung 100 und dazugehörigen Hebelelemente 120, 126 sind lediglich schematisch und unvollständig gezeigt. Es sei angemerkt, dass die Vorrichtung im Wesentlichen stufenlos verstellbar ist und somit auch jede weitere Stellung zwischen den in FIG. 2 angedeuteten Position einnehmen kann. Die unten beschriebene Haltevorrichtung 150 ermöglicht es, die Vorrichtung 100 in jeder beliebigen Position zu fixieren.

Die Schwenkachse 152 des Hebelelements 120 der ersten Belastungsanordnung 108 ist mit einem Bremsscheibensegment 154 verbunden. Das Bremsscheibensegment 154 ist ein Teil einer Haltevorrichtung 150, welche dazu ausgebildet ist, die erste Belastungsanordnung 108 in einer beliebigen Position, beispielsweise in der Arbeitsposition 120b, 126b, zu fixieren. Hierzu weist die Haltevorrichtung 150 ein als Reibungsbremse ausgebildetes Fixierelement 156 auf. Das Fixierelement dient der Aktivierung der Haltevorrichtung, sobald die Belastungsanordnung in der gewünschten Position ist. Beispielsweise kann es sich bei dem Fixierelement 156 um Bremsbacken handeln, welche das Bremsscheibensegment 154 selektiv kontaktieren/klemmen. Es sei an dieser Stelle angemerkt, dass die Haltevorrichtung auch anderweitig ausgestaltet sein kann. So ist es alternativ denkbar, die Haltevorrichtung nicht als Scheibenbremse im Sinne der Ausführungsform der FIGs. 1 bis 4 auszubilden, sondern beispielsweise eine Lochplatte mit Stiftverbinder vorzusehen.

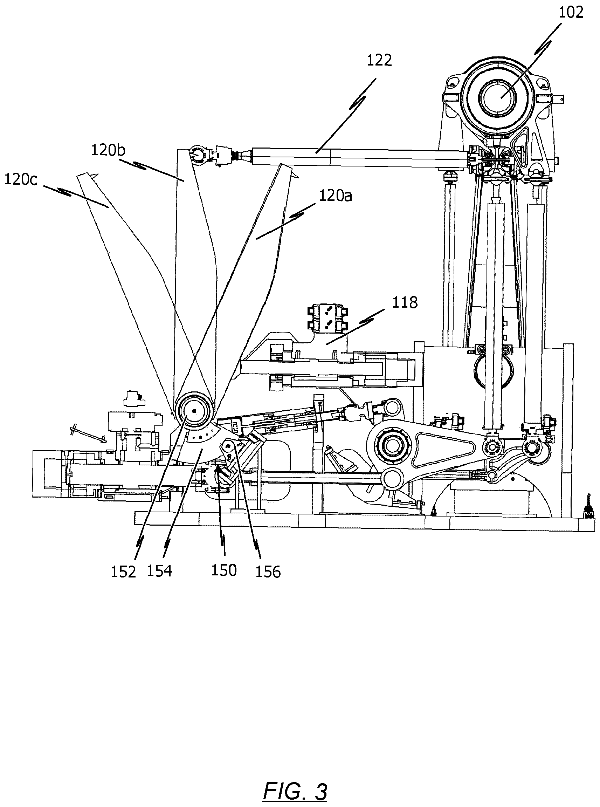

Die in den Ausführungsformen gezeigte Haltevorrichtung 150 (Scheibenbremse) ist in FIG. 3 im Detail gezeigt. Insbesondere ist aus der FIG. 3 erkennbar, dass das Bremsscheibensegment 154 derart an der Schwenkachse 152 des Hebelelements 120 angeordnet ist, dass dieses in jeder Position 120a, 120b, 120c des Hebelelements 120, und damit in jeder Position der ersten Belastungsanordnung 108, mit den Bremsbacken 156 in Kontakt bringbar ist. Mit anderen Worten, ein Teil des Bremsscheibensegments befindet sich zu jeder Zeit zwischen den Bremsbacken 156. Bei der in FIG. 3 gezeigten Position des Hebels 120 bzw. des Bremsscheibensegments 154 handelt es sich beispielsweise um die erste Position 120a. Es sei erwähnt, dass die Erfindung nicht auf ein Bremsscheibensegment beschränkt ist. Es kann sich auch um eine Bremsscheibe handeln, die die Schwenkachse 152 vollständig umgibt.

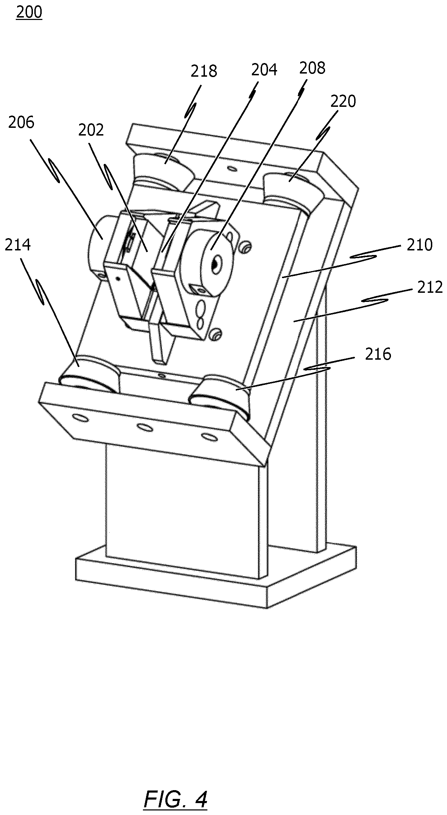

Die FIG. 4 zeigt eine schematische, perspektivische Ansicht einer Bremsenbaugruppe 200. Die Bremsenbaugruppe 200 trägt das als Reibungsbremse ausgebildete Fixierelement und befestigt dieses beispielsweise an der Verankerung 142. Die Bremsenbaugruppe 200 weist eine Halterung 212 auf, welche mit der Verankerung 142 bzw. der Bodenplatte fest verbunden ist. Die Bremsenbaugruppe weist ferner erste und zweite Bremsbacken 202, 204 auf, welche dazu ausgebildet sind mit dem Bremsscheibensegment 154 selektiv in Kontakt zu treten.

Die Bremsbacken 202, 204 können durch Antriebsmittel 206, 208 in bekannter Art und Weise bewegt werden, um eine Reibungskraft zusammen mit dem Bremsscheibensegment 154 zu erzeugen.

Die ersten und zweiten Bremsbacken 202, 204 sind auf einer Trägerplatte 210 angeordnet. Die Trägerplatte 210 ist über elastische Pufferelemente 214, 216, 218, 220 mit der Halterung 212 verbunden. Die elastischen Pufferelemente 214, 216, 218, 220 ermöglichen eine Relativbewegung zwischen der Trägerplatte 210 und der Halterung 212. Dies führt insbesondere dazu, dass die als Reibungsbremse ausgebildeten Bremsbacken 202, 204 in einer zum Bremsscheibensegment 154 parallelen Ebene beweglich gegenüber der Halterung 212 sind. Bei Aktivierung der Reibungsbremse kommt es demnach zunächst zu einer elastischen Verformung der elastischen Pufferelemente 214, 216 oder der elastischen Pufferelemente 218, 220, je nach Rotationsrichtung des Bremsscheibensegments 154. Die elastischen Pufferelemente dienen mithin dazu, ein sanftes Abfangen der Bewegung der Belastungsanordnung 108 zu ermöglichen. Dies schont insbesondere das Fahrwerk des zu prüfenden Test-Fahrzeugs.

Auch kann die als Scheibenbremse ausgebildete Haltevorrichtung dazu verwendet werden, das Bremsscheibensegment 154 und damit die erste Belastungsanordnung 108 graduell abzubremsen, das heißt die Bremsbacken 202, 204 können zunächst nur eine leichte Klemmkraft auf das Bremsscheibensegment 154 übertragen, welche schrittweise zunimmt, bis das Bremsscheibensegment und damit die erste Belastungsanordnung 108 in der gewünschten Position ist. Sobald die gewünschte Position der Belastungsanordnung 108 erreicht ist, können die Bremsbacken 202, 204 mit ganzer Kraft auf das Bremsscheibensegment 154 wirken, so dass die Belastungsanordnung 108 in der gewünschten Position fixiert wird. Dabei ist zu beachten, dass die Ansteuerung der Haltevorrichtung unabhängig von der Ansteuerung der Belastungsanordnung 108 erfolgt. Insbesondere ist zur Ansteuerung der Haltevorrichtung lediglich eine Aktivierung der Antriebselemente 206, 208 notwendig. Es ist dementsprechend gemäß der Erfindung nicht notwendig, den Aktuator 118 der ersten Belastungsanordnung 108 zum Halten der gewünschten Position (beispielsweise Arbeitsposition) weiter mit Druck zu beaufschlagen. Vielmehr kann die Belastungsanordnung 108 durch die Haltevorrichtung 150 allein in der gewünschten Position gehalten werden, so dass Beschädigungen des Fahrwerks bzw. mögliche Verletzungen wirkungsvoll verhindert werden können.

Die vorliegende Erfindung ist nicht auf die in den Zeichnungen beschriebenen Ausführungsformen beschränkt, sondern ergibt sich aus einer Kombination sämtlicher hierin offenbarter Merkmale. Es sei hier noch einmal ausdrücklich erwähnt, dass die Haltevorrichtung der vorliegenden Erfindung nicht auf eine Scheibenbremse gemäß der dargestellten Ausführungsformen beschränkt ist. Vielmehr kann auch ein Fixierelement mit Stiften zum kraftschlüssigen Verbinden der Haltevorrichtung mit der Belastungsanordnung oder ähnliche, selektive Anschläge verwendet werden. Auch bei einer derartigen Ausführungsform ist es bevorzugt, dass elastische Pufferelemente zwischen dem Fixierelement und einer entsprechenden Halterung der Haltevorrichtung vorgesehen werden, um ein abruptes Stoppen der Bewegung der ersten Belastungsanordnung zu verhindern.

Zwar ist in den Ausführungsformen nur eine Haltevorrichtung für die erste Belastungsanordnung 108 dargestellt. Jedoch ist es ebenso möglich, Haltevorrichtungen für jede andere Belastungsanordnung vorzusehen. Insbesondere kann es vorgesehen sein, dass jede der drei translatorischen Belastungsanordnungen 104, 108, 110 mit einer separaten Haltevorrichtung versehen ist.

## Patentansprüche

1. Vorrichtung (100) zur Krafteinleitung in ein Test-Fahrzeug, wobei die Vorrichtung (100) folgendes aufweist:
- Ein Radadapterelement (102), welches dazu ausgebildet ist mit einem Test-Fahrzeug verbunden zu werden;
- wenigstens eine erste Belastungsanordnung (108) zum Bewegen des Radadapterelements (102) in einer ersten, insbesondere translatorischen, Richtung;
- eine Haltevorrichtung (150), welche mit der ersten Belastungsanordnung verbunden und dazu ausgebildet ist die erste Belastungsanordnung in einer beliebigen Position, insbesondere einer Arbeitsposition, zu fixieren,
wobei die Haltevorrichtung (150) unabhängig von der ersten Belastungsanordnung (108) steuerbar ist.

2. Die Vorrichtung (100) nach Anspruch 1,
wobei die Haltevorrichtung (150) dazu ausgebildet ist eine Bewegung der ersten Belastungsanordnung (108) graduell zu bremsen, bis die erste Belastungsanordnung (108) in einer gewünschten Position ruht und durch die Haltevorrichtung (150) fixiert wird.

3. Die Vorrichtung (100) nach Anspruch 2,
wobei die Haltevorrichtung (150) eine Scheibenbremse aufweist, um die Bewegung der Belastungsanordnung (108) graduell zu bremsen.

4. Die Vorrichtung (100) nach Anspruch 3,
wobei die Scheibenbremse eine Bremsscheibe oder ein Bremsscheibensegment (154) aufweist, welches an der ersten Belastungsanordnung (108) angebracht ist.

5. Die Vorrichtung (100) nach Anspruch 4,
wobei die erste Belastungsanordnung (108) ein Hebelelement (120), insbesondere einarmigen Hebel, aufweist, welches zwischen einem ersten Aktuator (118) und dem Radadapterelement (102) angeordnet ist, um das Radadapterelement (102) in der ersten Richtung zu bewegen, und wobei die Bremsscheibe oder das Bremsscheibensegment (154) an einer Schwenkachse (152) des Hebelelements (120) befestigt ist.

6. Die Vorrichtung (100) nach Anspruch 5,
wobei die erste Belastungsanordnung (108) ein Übertragungselement (122), insbesondere eine Koppelstange, aufweist, welches zwischen dem Hebelelement (120) und dem Radadapterelement angeordnet ist.

7. Die Vorrichtung (100) nach Anspruch 6,
wobei die Vorrichtung ferner folgendes aufweist:
- eine zweite Belastungsanordnung (104) zum Bewegen des Radadapterelements (102) in einer zweiten, insbesondere translatorischen, Richtung, wobei die zweite Richtung im Wesentlichen orthogonal zur ersten Richtung verläuft;
- eine dritte Belastungsanordnung (110) zum Bewegen des Radadapterelements (102) in einer dritten, insbesondere translatorischen, Richtung, wobei die dritte Richtung im Wesentlichen orthogonal zur ersten und zweiten Richtung verläuft,
wobei das Übertragungselement (122) der ersten Belastungsanordnung (108) in einem Dreigelenkknoten (130) mit Übertragungselementen (114, 128) der zweiten und dritten Belastungsanordnung gelenkig verbunden ist.

8. Die Vorrichtung (100) nach einem der Ansprüche 1 bis 7,
wobei die Haltevorrichtung (150) wenigstens ein Fixierelement (156) zur Aktivierung der Haltevorrichtung (150) aufweist, wobei das Fixierelement (156) über mindestens ein elastisches Pufferelement (214, 216, 218, 220) mit einer Halterung der Haltevorrichtung (150) verbunden ist.

9. Die Vorrichtung (100) nach Anspruch 8,
wobei das Fixierelement (156) als Reibungsbremse ausgebildet ist und die Haltevorrichtung (150) eine Bremsscheibe bzw. ein Bremsscheibensegment (154) aufweist, welches dazu ausgebildet ist mit der Reibungsbremse zusammen zu wirken, um die erste Belastungsanordnung (108) zu fixieren, und
wobei das mindestens eine, elastische Pufferelement (214, 216, 218, 220) derart angeordnet ist, dass die Reibungsbremse zumindest in einer zur Bremsscheibe/Bremsscheibensegment (154) parallelen Ebene beweglich gegenüber der Halterung (212) ist.

10. Die Vorrichtung (100) Anspruch 9,
wobei das Fixierelement (156) Bremsbacken (202, 204) aufweist, welche dazu ausgelegt sind mit der Bremsscheibe bzw. dem Bremsscheibensegment (154) zusammenzuwirken, um die erste Belastungsanordnung (108) zu fixieren.

11. Ein Prüfstand zum Simulieren von im Fahrbetrieb auftretenden Kräften und Belastungen in einem Test-Fahrzeug, wobei der Prüfstand je eine Vorrichtung gemäß einem der Ansprüche 1 bis 10 pro Rad des Test-Fahrzeugs aufweist.
